# EUROPEAN PATENT SPECIFICATION

(11) **EP 4 237 102 B1**
(45) Date of publication and mention of the grant of the patent: **11.06.2025**
(21) Application number: 21811621.8
(22) Date of filing: 28.10.2021
(51) Int. Cl.: A62C 3/16

(54) **THERMAL PROTECTION OF LITHIUM ION BATTERIES**
WÄRMESCHUTZ VON LITHIUM-IONEN-BATTERIEN
PROTECTION THERMIQUE DE BATTERIES AU LITHIUM-ION

(30) Priority: 29.10.2020 US 202063107052 P
(43) Date of publication of application: 06.09.2023
(73) Proprietor: The Chemours Company FC, LLC, Wilmington, DE 19801 (US)
(72) Inventor: ROBIN, Mark L., Middletown, DE 19709 (US)
(74) Representative: Abitz & Partner
(86) International application number: PCT/US2021/056948
(87) International publication number: WO 2022/094013

(56) References cited:
- CN-A- 109 718 490
- CN-A- 110 600 638
- CN-U- 206 167 681
- CN-U- 206 560 619
- CN-U- 206 995 642
- CN-U- 210 503 141

## Description

### CROSS REFERENCE TO RELATED APPLICATIONS

This application claims the benefit of priority of U.S. Provisional Application No. 63/107,052 filed October 29, 2020.

### TECHNICAL FIELD

The present disclosure relates to protection of lithium ion batteries from thermal events, including extinguishing flames and terminating thermal runaway.

### BACKGROUND

It is generally accepted within the specialty fire suppression industry that gaseous clean fire extinguishing agents such as FM-200^{™} (HFC-227ea, 1,1,1,2,3,3,3-heptafluoropropane) and Novec^{™} 1230 (FK-5-1-12, perfluoroethylisopropyl ketone) are incapable of terminating thermal runaway, especially cascading thermal runaway, associated with lithium ion battery (LIB) fires in currently available methods and systems, and are limited only to the extinguishment of the liquid electrolyte fires associated with LIBs. For example, Ingram disclosed in "Lithium-Ion Batteries: A Potential Fire Hazard" (Data Center Journal, 2013), "Gaseous agents will extinguish flames due to burning leaked electrolyte but have little or no effect on mitigating or preventing a thermal runaway occurring within Li-ion cells." More recently, Ingram disclosed in "Fire Suppression for Lithium Ion Battery Fires" presented at the Fire Suppression System Association's Annual Meeting in 2019, "thermal runaway ... cannot be controlled by any suppression system."

U.S. 2010/0078182 discloses a device for generating and storing electrical or mechanical energy, such as a fuel cell, regular battery or rechargeable battery, and method for fire avoidance. At least one element of the device serving to generate or store electrical or mechanical energy is disposed within an encapsulation. A container storing a flame-retardant substance is in contact with the encapsulation. If multiple cells are present, the system does not isolate cells from one another to prevent damage to other cells. Furthermore, this system has no method for activating in the presence of open flame. US 2010/0078182 recites flame extinguishment, but fails to address termination of thermal runaway.

CN 110 600 638 A is a prior art which discloses the preamble of the independent claims 1 and 5. CN206167681 discloses a device to protect a lithium ion battery in an automobile from fire, which involves use of a fire detection/delivery tube located within a battery case enclosing the battery. A fire extinguishing agent can be heptafluoropropane. A pressure signal sensor is installed on the fire extinguishing agent conveying and fire detecting tube inside the battery case. CN206167681 recites fire extinguishment, but fails to address termination of thermal runaway.

US7823650 discloses a hazard control system to deliver a fire extinguishing agent in response to detection of a hazard, such as a fire. The system may use a pressure tube configured to leak in response to exposure to heat. The elements of the system include (1) a control unit, (2) a fire extinguishing agent; (3) a hazard detection system and (4) a hazard area and (5) a delivery system which delivers the fire extinguishing agent to the hazard area. The hazard detection system generates a signal in response to detecting a hazard such as a change in pressure in a pressure tube. US7823650 recites a fire control system, but fails to address how to extinguish a fire or how to terminate thermal runaway.

A need remains to address the thermal protection needs associated with lithium ion batteries, including termination of thermal runaway, and extinguishing flames as well as preventing reignition of an extinguished fire. The present disclosure meets these needs.

### SUMMARY

The present invention concerns a method according to the independent claim 1, resp. according to the independent claim 5.

The concentration, discharge time and hold time of the thermal runaway termination agent within the enclosure provides the following advantages over existing systems: (1) extinguishes a flame once a flame has generated; (2) terminates thermal runaway occurring in a single cell lithium ion battery or in a multiple cell lithium ion battery or in a lithium ion battery bank, and (3) prevents reignition from occurring after flame has been extinguished.

The disclosure furthermore discloses a fire protection system, which is not part of the invention and which comprises: (a) an enclosure; (b) a device, positioned within the enclosure, wherein the device comprises and is powered by a lithium ion battery; (c) a source of a thermal runaway termination agent, wherein the source comprises a container and a two-way control valve, wherein the container contains the thermal runaway termination agent, the two-way control valve is attached to an opening in the container, and the thermal runaway termination agent comprises HFC-227ea; and (d) a temperature sensitive tube containing an inert gas or a thermal runaway termination agent at a predetermined pressure and temperature suitable for normal operating conditions of the device, wherein the tube has two ends, wherein (i) one end is in communication with the two-way control valve and the other end is capped, (ii) the tube is located within the enclosure and comprises a temperature sensor for detection of a threshold temperature, and (iii) the tube is disposed in proximity to the lithium ion battery, and the tube is burstable upon sensing a threshold temperature.

The disclosure furthermore discloses a fire protection system, which is not part of the invention and which comprises: (a) an enclosure; (b) a device, positioned within the enclosure, wherein the device comprises and is powered by a lithium ion battery; (c) a source of a thermal runaway termination agent, wherein the source comprises a container and a three-way control valve, wherein the container contains the thermal runaway termination agent, the three-way control valve-is attached to an opening in the container, and the thermal runaway termination agent comprises HFC-227ea; and (d) a temperature sensitive tube containing an inert gas or a thermal runaway termination agent at a predetermined pressure and temperature suitable for normal operating conditions of the device, wherein the temperature sensitive tube has two ends, wherein (i) one end is in communication with the three-way control valve and the other end is capped, (ii) the temperature sensitive tube is located within the enclosure and comprises a temperature sensor for detection of a threshold temperature, and (iii) the temperature sensitive tube disposed in proximity to the lithium ion battery, and the temperature sensitive tube is burstable upon sensing a threshold temperature; and (e) a nozzle-connecting tube which is in communication with the three-way control valve on one end and terminates in a nozzle proximal to the lithium ion battery at the other end of the nozzle-connecting tube.

Other features will be apparent to those skilled in the art based on this disclosure.

In accordance with the present disclosure, a problem of lithium ion batteries is that fire extinguishing agents are incapable of terminating thermal runaway and that thermal runaway cannot be terminated by any suppression system is addressed. It is by selection of a particular thermal runaway termination agent and administration of the agent for a particular discharge time, at a particular concentration and hold time within a device powered by a lithium ion battery, that not only extinguish a flame within the device (initial extinguishment), but also terminate thermal runaway and prevent reignition following initial extinguishment of flames.

### BRIEF DESCRIPTION OF THE FIGURES

FIGURES 1a and 1b are illustrations of one embodiment of a LIB protection system of the present disclosure.
FIGURE 2 is an illustration of a second embodiment of a LIB protection system of the present disclosure.
FIGURE 3 is an illustration of a third embodiment of a LIB protection system of the present disclosure.
FIGURE 4 is an illustration of a fourth embodiment of a LIB protection system of the present disclosure.
FIGURE 5 is an illustration of a typical lithium ion battery (LIB).

### DETAILED DESCRIPTION

### Methods for Extinguishing a Flame and Terminating Thermal Runaway

### Embodiment 1

In certain embodiments of this disclosure, there is provided a method for extinguishing a flame and terminating thermal runaway in a device comprising (a) providing an enclosure; (b) providing a device positioned within the enclosure, wherein the device comprises and is powered by a lithium ion battery; (c) providing a source of a thermal runaway termination agent, wherein the source comprises a container and a two-way control valve, wherein the container contains the thermal runaway termination agent, the two-way control valve is attached to an opening in the container, and the thermal runaway termination agent comprises HFC-227ea; (d) providing a temperature sensitive tube containing an inert gas or a thermal runaway termination agent at a predetermined pressure and temperature suitable for normal operating conditions of the device, wherein the tube has two ends, wherein (i) one end is in communication with the two-way control valve and the other end is capped, (ii) the tube is located within the enclosure and comprises a temperature sensor for detection of a threshold temperature, and (iii) the tube is disposed in proximity to the lithium ion battery; and (e) providing a heat stimulus, which generates a flame and initiates thermal runaway, whereupon the temperature sensitive tube ruptures, creating an opening in the tube (heat stimulus-created opening) and causing release of the inert gas or thermal runaway termination agent within the temperature sensitive tube through the heat stimulus-created opening in the temperature sensitive tube and into the enclosure, resulting in a pressure drop within the temperature sensitive tube which actuates the two-way control valve to deliver the thermal runaway termination agent from the storage container through the two-way control valve to the temperature sensitive tube and out of the heat stimulus-created opening in the temperature sensitive tube and into the enclosure; wherein the delivery of the thermal runaway termination agent is characterized by a discharge time of at least 18 seconds, a HFC-227ea concentration of at least 17% v/v, and a hold time of 10 to 15 minutes or 15 to 30 minutes or 30 to 60 minutes that are sufficient to extinguish the flame and terminate thermal runaway and the hold time is sufficient to cool the enclosure and the lithium ion battery to a temperature sufficient to prevent reignition following the extinguishment of the flame.

The two-way control valve is in sensor communication with the temperature sensitive tube. In this embodiment, the temperature sensitive tube is in fluid communication with the source through the two-way control valve such that when the two-way control valve is actuated, the thermal runaway termination agent is delivered to the temperature sensitive tube. In this embodiment the temperature sensitive tube acts to both detect the heat stimulus and to deliver the thermal runaway termination agent into the enclosure.

In one method under Embodiment 1, in step (d), the temperature sensitive tube contains an inert gas. In an alternative method under Embodiment 1, in step (d), the temperature sensitive tube contains a thermal runaway termination agent.

### Embodiment 2

There is also provided a method for extinguishing a flame and terminating thermal runaway in a device powered by a lithium ion battery that comprises (a) providing an enclosure; (b) providing a device positioned within the enclosure, wherein the device comprises and is powered by a lithium ion battery; (c) providing a source of a thermal runaway termination agent, wherein the source comprises a container and a three-way control valve, wherein the container contains the thermal runaway termination agent, the three-way control valve is attached to an opening in the container, and the thermal runaway termination agent comprises HFC-227ea; (d) providing a temperature sensitive tube containing an inert gas or a thermal runaway termination agent at a predetermined pressure and temperature suitable for normal operating conditions of the device, wherein the temperature sensitive tube has two ends, wherein (i) one end is in communication with the three-way control valve and the other end is capped, (ii) the temperature sensitive tube is located within the enclosure and comprises a temperature sensor for detection of a threshold temperature, and (iii) the temperature sensitive tube disposed in proximity to the lithium ion battery; (e) providing a nozzle-connecting tube which is in communication with the three-way control valve on one end and terminates in a nozzle proximal to the lithium ion battery at the other end of the nozzle-connecting tube; and (f) providing a heat stimulus, which generates a flame and initiates thermal runaway, whereupon the temperature sensitive tube ruptures, creating an opening in the temperature sensitive tube (heat stimulus-created opening) and causing release of the inert gas or thermal runaway termination agent within the temperature sensitive tube through the heat stimulus-created opening in the temperature sensitive tube and into the enclosure, resulting in a pressure drop within the temperature sensitive tube which actuates the three-way control valve to deliver the thermal runaway termination agent from the storage container through the three-way control valve to the nozzle-connecting tube, resulting in the release of the thermal runaway termination agent from the nozzle into the enclosure; wherein the delivery of the thermal runaway termination agent is characterized by a discharge time of at least 18 seconds, a HFC-227ea concentration of at least 17% v/v, and a hold time of 10 to 15 minutes or 15 to 30 minutes or 30 to 60 minutes that are sufficient to extinguish the flame and terminate thermal runaway and the hold time is sufficient to cool the enclosure and the lithium ion battery to a temperature sufficient to prevent reignition following the extinguishment of the flame.

The three-way control valve is in sensor communication with the temperature sensitive tube. In this embodiment, the temperature sensitive tube is in fluid communication with the source such that when the three-way control valve is actuated, the thermal runaway termination agent is delivered through a nozzle-connecting tube terminating in a nozzle proximal to the lithium ion battery, releasing the thermal runaway termination agent through the nozzle into the enclosure. In this embodiment, the temperature sensitive tube acts to detect the heat stimulus, and a nozzle-connecting tube acts to deliver the thermal runaway terminating agent into the enclosure.

In one method under Embodiment 2, in step (d), the temperature sensitive tube contains an inert gas. In an alternative method under Embodiment 2, in step (d), the temperature sensitive tube contains a thermal runaway termination agent.

### Fire Protection System for Lithium Ion Battery

### Embodiment 3

In certain embodiments of this disclosure, there is provided a fire protection system**,** which does not make part of the invention and which comprises: (a) an enclosure; (b) a device positioned within the enclosure, wherein the device comprises and is powered by a lithium ion battery; (c) a source of a thermal runaway termination agent, wherein the source comprises a container and a two-way control valve, wherein the container contains the thermal runaway termination agent, the two-way control valve is attached to an opening in the container, and the thermal runaway termination agent comprises HFC-227ea; (c) a temperature sensitive tube containing an inert gas or a thermal runaway termination agent at a predetermined pressure and temperature suitable for normal operating conditions of the device, wherein the tube has two ends, wherein (i) one end is in communication with the two-way control valve and the other end is capped, (ii) the tube is located within the enclosure and comprises a temperature sensor for detection of a threshold temperature, and (iii) the temperature sensitive tube is disposed in proximity to the lithium ion battery, and the temperature sensitive tube is burstable upon sensing a threshold temperature.

The two-way control valve is in sensor communication with the temperature sensitive tube in this embodiment. Further, in this embodiment, the temperature sensitive tube is in fluid communication with the source such that when the two-way control valve is actuated, the thermal runaway termination agent is delivered to the temperature sensitive tube. In this embodiment the temperature sensitive tube acts to both detect the heat stimulus and to deliver the thermal runaway termination agent into the enclosure.

In one fire protection system under Embodiment 3, the temperature sensitive tube of component (c) contains an inert gas. In an alternative fire protection system under Embodiment 3, the temperature sensitive tube of component (c) contains a thermal runaway termination agent.

### Embodiment 4

There is also provided a fire protection system**,** which does not make part of the invention and which comprises:
(a) an enclosure; (b) a device, positioned within the enclosure, wherein the device comprises and is powered by a lithium ion battery; (c) a source of a thermal runaway termination agent, wherein the source comprises a container and a three-way control valve, wherein the container contains the thermal runaway termination agent, the three-way control valve is attached to an opening in the container, and the thermal runaway termination agent comprises HFC-227ea; (d) a temperature sensitive tube containing an inert gas or a thermal runaway termination agent at a predetermined pressure and temperature suitable for normal operating conditions of the device, wherein the tube has two ends, wherein (i) one end is in communication with the three-way control valve and the other end is capped, (ii) the tube is located within the enclosure and comprises a temperature sensor for detection of a threshold temperature, and (iii) the temperature sensitive tube disposed in proximity to the lithium ion battery, and the temperature sensitive tube is burstable upon sensing a threshold temperature; and (e) a nozzle-connecting tube which is in communication with the three-way control valve on one end and terminates in a nozzle proximal to the lithium ion battery at the other end of the nozzle-connecting tube.

The three-way control valve is in sensor communication with the temperature sensitive tube in this embodiment. Further, in this embodiment, the three-way control valve is in fluid communication with the nozzle-connecting tube such that when the three-way control valve is actuated, the thermal runaway termination agent is delivered to the nozzle-connecting tube. In this embodiment the temperature sensitive tube performs the functions of temperature sensor and actuator or actuating (activating) device of the three-way control valve but not as a delivery tube for the thermal runaway termination agent into the enclosure. The nozzle-connecting tube performs the function of delivery tube in this embodiment.

In one fire protection system under Embodiment 4, the temperature sensitive tube of component (c) contains an inert gas. In an alternative fire protection system under Embodiment 4, the temperature sensitive tube of component (c) contains a thermal runaway termination agent.

Terms used herein with particular meanings are provided below.

By "sensor communication" is meant herein a control valve is capable of receiving a signal generated by the temperature sensitive tube which results in actuating the control valve to open the container to release the thermal runaway termination agent from the container. The control valve is a two-way control valve or a three-way control valve, depending on the embodiment. The signal may be, for example, pneumatic or electronic.

In Embodiments 1 and 3, the two-way control valve is in sensor communication with the temperature sensitive tube. In Embodiments 2 and 4, the three-way control valve is in sensor communication with the temperature sensitive tube.

As used herein, a two-way control valve is a control valve having at least two ports. Thus, it is understood by one skilled in the art that a two-way control valve may have more than two ports. In Embodiments 1 and 3, a two-way control valve is meant to include a control valve having at least three ports. For example, a two-way control valve having a third port may be employed, where a third port provides an option for withdrawing a sample of the container contents.

Similarly, a three-way control valve is a control valve having at least three ports. Thus, it is understood by one skilled in the art that a three-way control valve may have more than three ports. In Embodiments 2 and 4, a three-way control valve is meant to include a control valve having at least four ports. For example, a three-way control valve having a fourth port may be employed, where a fourth port provides an option for withdrawing a sample of the container contents.

By "fluid communication" is meant a fluid is able to flow from the container through a control valve without interruption to either the temperature sensitive tube or to the nozzle-connecting tube.

In Embodiments 1 and 3, the two-way control valve is in fluid communication with the container and the temperature sensitive tube. In Embodiments 2 and 4, the three-way control valve is in fluid communication with the container and the nozzle-connecting tube.

More specifically, in Embodiment 1, rupture of the temperature sensitive tube in step (e) results in flow of the thermal runaway termination agent from the container through a two-way control valve to the temperature sensitive tube and into the enclosure. More specifically, in Embodiment 2, rupture of the temperature sensitive tube in step (f) results in flow of the thermal runaway termination agent from the container through a three-way control valve to a nozzle-connecting tube through a nozzle proximal to the lithium ion battery into the enclosure.

Sensor communication and fluid communication occur regardless of whether the source is positioned inside of or outside of the enclosure.

### Device

A device powered by a lithium ion battery is any device powered by one or more lithium ion batteries. Examples of lithium ion battery-powered devices which are suitable for the methods and systems disclosed herein include datalogger, telecommunication equipment, personal electronic equipment, power tools, energy storage system, data center, electric motor vehicle, and electric bicycle. Personal electronic equipment includes cell phone, laptop computer and gaming system.

### Battery

"Battery" as used herein means a container comprising at least one cell, in which chemical energy is converted into electricity and used as a source of power. A "cell" comprises a single anode and cathode separated by electrolyte used to produce a voltage and current. In a "battery bank" or "battery pack" two or more batteries may be arranged in parallel, in series, or in a combination of both when three or more batteries are present.

### Lithium ion battery

"Lithium ion battery" or "LIB" as used herein means a battery which uses lithium ion chemistry and comprises an electrolytic cell having a lithium salt electrolyte. The lithium ion battery may be a single cell battery or a multiple cell battery or a battery bank comprising two or more lithium ion batteries.

A LIB comprises an anode chamber comprising an anode chamber comprising an anode, a cathode chamber comprising a cathode and a semipermeable membrane, which separates the anode chamber from the cathode chamber. The anode is constructed of graphite protected with a solid electrolyte interphase (SEI) layer. The cathode is constructed of a lithium metal oxide such as LiCoO₂, LiFePO₄, LiMn₂O₄ or LiNiMnCoO₂. The anode chamber and cathode chamber are each filled with a liquid electrolyte. The liquid electrolyte is typically a flammable organic carbonate such as ethylene carbonate or diethyl carbonate. The liquid electrolyte contains a lithium salt such as LiPF₆, LiAsF₆, LiClO₄, LiBF₄, or LiCF₃SO₃.

### Enclosure

The lithium ion battery powered device is located within an enclosure. The enclosure is constructed of material of sufficient temperature- and pressure-resistance to contain within the enclosure a flame generated from the battery. The enclosure creates a physical barrier between the LIB-powered device and the area surrounding the enclosure.

### Source of thermal runaway termination agent

A source of a thermal runaway termination agent is provided. The source comprises a storage container which stores the thermal runaway termination agent during normal operation. The source further comprises a control valve mounted on the container. The control valve can be a two-way control valve or a three-way control valve, depending on the embodiment.

In any of the embodiments disclosed herein, the source may be located within the enclosure.

Alternatively, in any of the embodiments disclosed herein, the source may be located outside of the enclosure. In such embodiments, the enclosure has an opening to provide sensor communication between the temperature sensitive tube and the control valve. When this embodiment is Embodiment 1 or Embodiment 3, the enclosure also has an opening to provide fluid communication between the two-way control valve and the temperature sensitive tube for delivery of the thermal runaway termination agent into the enclosure. When this embodiment is Embodiment 2 or Embodiment 4, the enclosure also has an opening to provide fluid communication between the three-way control valve and the nozzle-connecting tube. The openings for sensor communication and fluid communication in the enclosure are sealed to maintain integrity of the enclosure in the event of a heat stimulus.

### Control valve

In certain embodiments, which include Embodiment 1 and Embodiment 3, upon rupture of the temperature sensitive tube due to excessive heat caused by flame from a LIB fire, a two-way control valve permits discharge of the thermal runaway termination agent from the container through the temperature sensitive tube into the enclosure.

The two-way control valve is in sensor communication with the temperature sensitive tube. The two-way control valve can be any type of valve capable of receiving a signal from the temperature sensitive tube and being actuated by the signal. The signal is generated within the temperature sensitive tube upon rupture by a heat stimulus. Upon actuation, the two-way control valve opens fluid communication from the container through the valve and to the temperature sensitive tube to deliver the thermal runaway termination agent proximal to the lithium ion battery.

In such embodiments, the thermal runaway termination agent is delivered into the enclosure through the heat stimulus-created opening formed in the temperature sensitive tube. In such embodiments, the two-way control valve is in both sensor communication and fluid communication with the temperature sensitive tube.

In certain embodiments, which include Embodiment 2 and Embodiment 4, upon rupture of the temperature sensitive tube due to excessive heat caused by flame from a LIB fire, a three-way control valve permits discharge of the thermal runaway termination agent from the container through the valve to a nozzle-connecting tube into the enclosure.

The three-way control valve is in sensor communication with the temperature sensitive tube. The three-way control valve can be any type of valve capable of receiving a signal from the temperature sensitive tube and being actuated by the signal. The signal is generated within the temperature sensitive tube upon rupture by a heat stimulus. Upon actuation, the three-way control valve opens fluid communication from the container through the valve and to a nozzle-connecting tube to deliver the thermal runaway termination agent through a nozzle proximal to the lithium ion battery.

In such embodiments, the thermal runaway termination agent is delivered into the enclosure through the nozzle-connecting tube. In such embodiments, the three-way control valve is in sensor communication with the temperature sensitive tube and is in fluid communication with the nozzle-connecting tube.

### Inert gas

An inert gas as used herein comprises a gas chosen from nitrogen, argon, helium, carbon dioxide, and mixtures thereof. Optionally the inert gas further comprises the thermal runaway termination agent.

### Thermal runaway termination agent

The thermal runaway termination agent comprises HFC-227ea (1,1,1,2,3,3,3-heptafluoropane or simply HFC-227ea) in an amount sufficient to provide a concentration of at least 17% v/v (volume/volume) HFC-227ea when delivered to the enclosure. In a preferred embodiment, the thermal runaway termination agent comprises HFC-227ea in an amount sufficient to provide a concentration of at least 20% v/v HFC-227ea when delivered to the enclosure.

The thermal runaway termination agent may further comprise one or more inert gases. The inert gas may be chosen from nitrogen, argon, helium, carbon dioxide, and mixtures thereof.

The total pressure of the HFC-227ea/inert gas mixture is preferred to be 120 to 600 psig at 70°F (0.8 to 4 MPa at 21°C). Higher pressures may be used, with upper limits based on practicality among other reasons.

The thermal runaway termination agent may further comprise one or more halocarbon gases. The halocarbon gas may be chosen from pentafluoroethane (HFC-125), iodotrifluoromethane (CF₃I), trifluoromethane (CF₃H), 1,1,1,3,3,3-hexafluoroethane (HFC-236fa), E- or Z-1-chloro-3,3,3-trifluoropropene (E- or Z-HCFO-1233zd), E- or Z-1,3,3,3-tetrafluoropropene (E- or Z-HFO-1234ze), E- or Z-1-chloro-2,3,3,3-tetrafluoropropene (E- or Z-1224yd), or perfluoroethyl perfluoroisopropyl ketone (FK-5-1-12, (CF₃)₂CFC(O)CF₂CF₃).

### Temperature sensitive tube

A temperature sensitive tube is located within the enclosure. The temperature sensitive tube is a pressure tube, meaning the tube contains or is filled with an inert gas or with a thermal runaway termination agent at a predetermined pressure. Temperature sensitive tubes are available commercially, for example from Rotarex, Luxembourg.

The predetermined pressure provided for the inert gas or thermal runaway termination agent within the temperature sensitive tube may vary to afford different tube burst temperatures. Higher pressure will result in tube burst at lower temperature whereas lower pressure will result in tube burst at higher temperature.

By "tube burst" is meant an increase in pressure of the inert gas or thermal runaway termination agent within the tube causes rupture of the tube upon the occurrence of a heat stimulus. In other words, the temperature sensitive tube is "burstable" upon sensing a threshold temperature.

The threshold temperature is the temperature at which the temperature sensitive tube will rupture. The threshold temperature is determined by the predetermined pressure provided for the inert gas or thermal runaway termination agent within the temperature sensitive tube, and on the particular formulation of the temperature sensitive tube. That is, the detailed composition of the temperature sensitive tube can be varied to provide different threshold temperatures for tube burst.

As further described herein below, the heat stimulus may be a result of applied heat to the enclosure from an external heat source or from an internal heat source.

An external heat source is any source of heat, such as a hot engine or an external flame that is physically located outside of the enclosure.

An internal heat source may be the LIB itself, overheating due to a mechanical event or electrical event or a defect event, which, upon occurrence, generates heat within the enclosure. More information is provided below.

Once the tube bursts, the tube releases the inert gas or thermal runaway termination agent previously contained within. Furthermore, it will be appreciated by those skilled in the art that once the tube bursts, the inert gas or thermal runaway termination agent within the temperature sensitive tube will be released into the enclosure.

The temperature sensitive tube is disposed in the proximity to the lithium ion battery within the device within the enclosure such that heat released from the heat stimulus results in the rupture of the tube.

Rupture of the temperature sensitive tube results in forming an opening in the temperature sensitive tube, releasing inert gas or thermal runaway termination agent maintained in the temperature sensitive tube during normal operation into the enclosure. Rupture also generates a signal, e.g., from loss of pressure in the temperature sensitive tube, which is relayed to the control valve.

In Embodiment 1, the signal actuates a two-way control valve to release the thermal runaway termination agent from the storage container, through the two-way control valve, into the temperature sensitive tube, and out through the heat stimulus-created opening in the heat sensitive tube, providing flame extinguishment and termination of thermal runaway, and preventing reignition following initial extinguishment of flames. In this embodiment, the temperature sensitive tube performs the functions of temperature sensor, actuator or actuating device of the two-way control valve and delivery tube for the thermal runaway termination agent into the enclosure.

In Embodiment 2, the signal generated by rupture of the tube is relayed to a three-way control valve, which actuates the three-way control valve to release the thermal runaway termination agent from the container through the three-way control valve to a nozzle-connecting tube. The nozzle-connecting tube is separate from the temperature sensitive tube. In this embodiment, the nozzle-connecting tube has a nozzle at the end distal to the three-way control valve inside of the enclosure. In this embodiment, the temperature sensitive tube performs the functions of temperature sensor and actuator or actuating device of the three-way control valve but not as a delivery tube for the thermal runaway termination agent into the enclosure. The nozzle-connecting tube performs the function of delivery tube in this embodiment.

### Normal operating conditions

By "normal operating conditions" is meant herein, the device powered by a lithium ion battery is operating under conditions of temperature, pressure and environmental factors that do not cause the temperature sensitive tube to burst.

### Heat Stimulus

A heat stimulus is an event which causes heat generation within the enclosure so that the LIB ignites resulting in flame and thermal runaway within the device. The heat stimulus may be a mechanical event, a thermal event, an electrical event or a defect event.

A description of a typical LIB thermal runaway event can be found in Chapter 3.9.3 of "Lithium-Ion Battery Chemistries," John T. Warner [Elsevier 2019]. It is understood by those skilled in the art that the temperatures indicated in this description are not exact numbers because the exact temperatures depend on cell design and chemistry, however the sequence of events involved in thermal runaway are similar for the different designs of LIBs, as discussed below.

Thermal runaway occurs when temperature within a LIB cell has risen beyond the temperature of normal operating conditions such that chain reactions are initiated within the cell, which are self-sustaining due to uncontrolled temperature increases and oxygen generation.

According to Warner, once temperature of the cell reaches about 80°C, a protective solid electrolyte interphase (SEI) layer on the anode begins to decompose and break down in an exothermic reaction (generating heat) due to the reaction of the lithium with electrolyte solvent. At about 100°C-120°C, electrolyte (typically organic carbonates, which are flammable) begins to break down in another exothermic reaction, which in turn generates various gases such as CO₂ and hydrocarbons within the cell. As the temperature nears 120°C-130°C, the separator between the anode and cathode melts allowing contact between the anode and cathode causing an internal short circuit and generating more heat. As the temperature continues to rise, at about 130°C-150°C, the cathode begins breaking down in another exothermic chemical reaction with the electrolyte which also generates oxygen.

Release of oxygen from breakdown of the cathode and contact with the flammable electrolyte generates fire (flames) in the cell. The breakdown of the cathode is also a highly exothermic reaction generating a substantial amount of heat and continuing to drive the cell toward ultimate failure and further enhancing fire at the cell.

When temperatures rise above 150°C-180°C the chain reactions may become self-sustaining if the cell is not able to rapidly dissipate the heat being generated. At this point the cell is in what is referred to as "thermal runaway" as temperature increases and oxygen generation makes the fire self-sustaining. If gases continue to build up within the cell the cell may rupture or vent through a safety valve. The cell may rupture or vent the flammable hydrocarbon gases and hydrofluorocarbon electrolytes at this point. The introduction of a spark can ignite the electrolyte and the gases causing flame, fire, and potentially an explosion.

By "mechanical event" is meant there is a physical damage to the LIB such as penetration by a sharp or blunt object, crushing by a weighted object, automotive collision.

By "thermal event" is meant the LIB is exposed to a temperature which causes deterioration of the LIB. The source of the temperature may be internal, such as a loose connection causing the LIB to overheat from the inside, or external, such as a nearby heat source, an external flame or loss of climate control in a climate-controlled area.

By "electrical event" is meant the LIB experiences an issue interfering with or interrupting the normal flow of electrons through the LIB, such as due to a short circuit or overcharging.

By a "defect event" is meant the design or manufacture (e.g., insufficient quality control, poor insulation, loose connections) of the LIB introduced a flaw that failed to protect the LIB from short circuiting or heat generation during normal operation.

Two or more of a mechanical event, a thermal event, an electrical event or a defect event may be coupled causing the heat stimulus. For example, in one embodiment, a short circuit (electrical event) may cause the LIB to overheat (thermal event) resulting in a coupled event as the heat stimulus. In another embodiment, a mechanical event, such as a puncture or penetration of the LIB may cause a short circuit (electrical event) leading to rapid heating (thermal event) as the heat stimulus. In another embodiment, a loose connection (defect event) may lead to overheating (thermal event) as the heat stimulus. The aforementioned embodiments are merely examples and not intended to be exhaustive.

Upon the occurrence of a heat stimulus, the temperature sensitive tube may burst, thus releasing inert gas or thermal runaway termination agent into the enclosure.

The thermal runaway termination agent is released at specified discharge time, agent concentration, and hold time, thereby terminating both flame and thermal runaway, and preventing reignition following initial extinguishment of flames. The generally accepted definitions of agent concentration, discharge time, and hold time are understood by those skilled in the art as provided in NFPA 2001 Standard for Clean Agent Fire Protection Systems, available at https://www.nfpa.org/codes-and-standards/all-codes-and-standards/list-of-codes-and-standards/detail?code=2001.

The thermal runaway termination agent is released into the enclosure at a specified discharge time, agent concentration and hold time, each being sufficient to extinguish any flame that may be present as well as to terminate thermal runaway. The thermal runaway termination agent release is also provided such that the hold time is sufficient to cool the enclosure and the LIB to a temperature sufficient to prevent re-ignition.

In a preferred embodiment, the thermal runaway termination agent comprises HFC-227ea in an amount sufficient to provide a concentration of from 17% to 30% v/v when delivered to the enclosure. In an alternative embodiment, the thermal runaway termination agent comprises HFC-227ea in an amount sufficient to provide a concentration of from 18% to 28% v/v. In another, the thermal runaway termination agent comprises HFC-227ea in an amount sufficient to provide a concentration of from 20% to 23% v/v.

According to the invention, the discharge time ranges from 18 seconds to 180 seconds, or from 25 to 120 seconds and or from 45 to 120 seconds. By "discharge time" it is meant herein, the time from the start of agent delivery into the enclosure to the time at which 95% of the agent has been delivered into the enclosure.

According to the invention, the hold time ranges from 10 to 15 minutes, or from 15 to 30 minutes, or from 30 to 60 minutes. By "hold time" it is meant herein the time period over which the agent concentration in the enclosure remains at the desired concentration (over time, agent can slowly leak from small openings in the enclosure, e.g., vents, louvres, etc.).

According to the invention, the discharge time is at least 18 seconds and the thermal runaway termination agent comprises HFC-227ea in an amount sufficient to provide a concentration of at least 17% v/v HFC-227ea to provide flame extinguishment, terminating thermal runaway in single or multiple cell configurations and cooling sufficient to prevent reignition. Longer discharge times and higher concentrations may be used, with upper limits based on practicality among other reasons.

### Detailed Description of the Figures

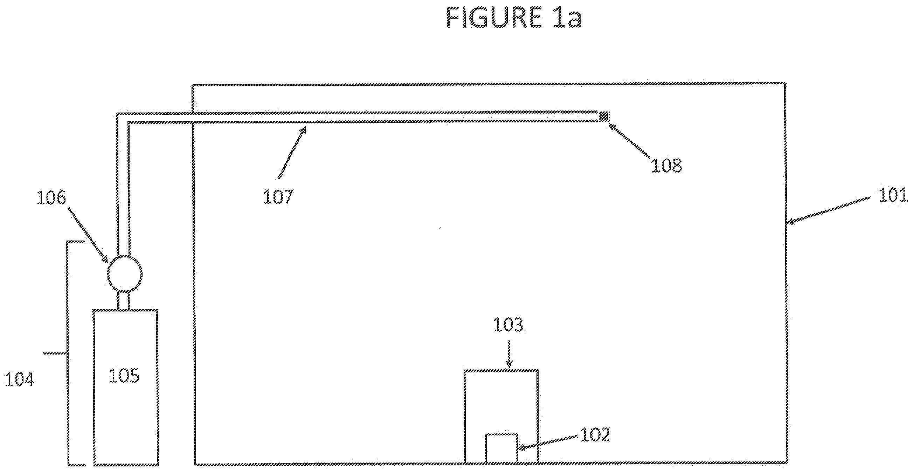

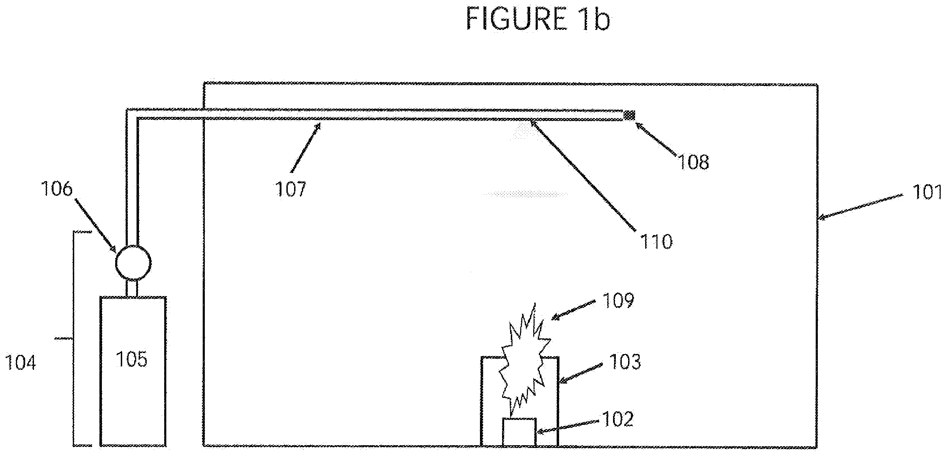

FIGURES 1a and 1b are illustrations of a LIB protection system disclosed herein used in a method for extinguishing a flame and terminating thermal runaway in a device powered by a lithium ion battery as disclosed herein. Enclosure **101** is a hazard area that may experience a lithium ion battery (LIB) fire originating in LIB **102** located in a LIB-powered device **103.** The LIB fire protection system includes a source of thermal runaway termination agent **104,** comprising thermal runaway termination agent container **105** and two-way control valve **106,** which is connected to thermal runaway termination agent container **105** and to temperature sensitive tube **107.** Temperature sensitive tube **107** has an end which is sealed off via tube end seal **108.** Temperature sensitive tube **107** is pressurized to a desired pressure with inert gas or thermal runaway termination agent. In the event of a fire **109** originating in LIB-powered device **103,** the portion of the temperature sensitive tube **107** where maximum heat (threshold temperature) is detected ruptures (see FIGURE 1b), forming a heat stimulus-created opening **110,** releasing the inert gas or thermal runaway termination agent from within temperature sensitive tube **107** into enclosure **101,** and simultaneously resulting in a pressure drop within temperature sensitive tube **107** which activates control valve **106** to deliver the thermal runaway termination agent from thermal runaway termination agent storage container **105** through control valve **106,** into temperature sensitive tube **107,** out of the heat stimulus-created opening **110** (see FIGURE 1b) into temperature sensitive tube **107** and into enclosure **101.** Release of the thermal runaway termination agent into enclosure **101** results in flame extinguishment and the termination of thermal runaway in the LIB-powered device **103** and prevents reignition following initial extinguishment of flames.

FIGURE 1b is the same as FIGURE 1a, with the exception that in FIGURE 1b, temperature sensitive tube **107** has ruptured, due to flame **109** and heat stimulus-created opening **110** is seen.

In the LIB fire protection system illustrated in FIGURES 1a and 1b, the temperature sensitive tube **107** performs the functions of temperature sensor (also considered fire detection device), actuator or actuating device (also considered system activation device) of the two-way control valve and delivery tube for the thermal runaway termination agent into the enclosure.

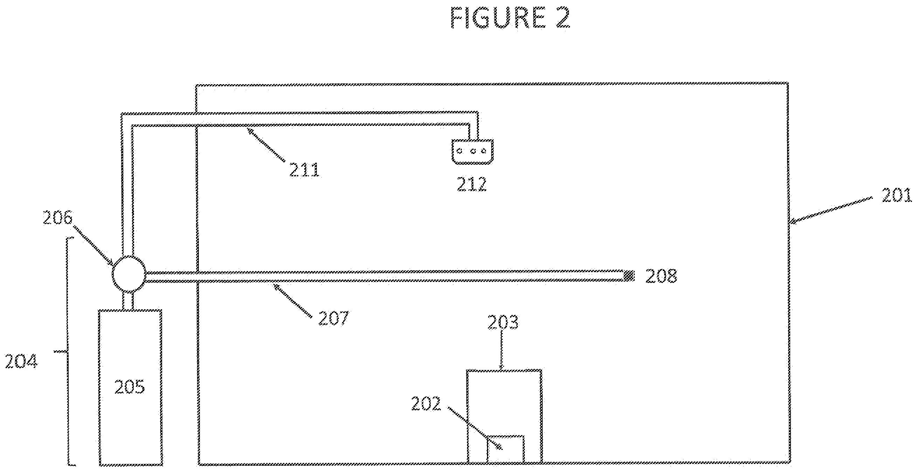

FIGURE 2 is an illustration of a LIB protection system disclosed herein used in a method for extinguishing a flame and terminating thermal runaway in a device powered by a lithium ion battery as disclosed herein. Enclosure **201** is a hazard area that may experience a lithium-ion battery (LIB) fire originating in LIB **202** located inside LIB-powered device **203.** The LIB fire protection system includes source of thermal runaway termination agent **204,** which comprises thermal runaway termination agent container **205** and three-way control valve **206,** which is connected to thermal runaway termination agent container **205** and to temperature sensitive tube **207,** the end of which is sealed off via tube end seal **208.** Temperature sensitive tube **207** is pressurized to a desired pressure with inert gas or thermal runaway termination agent. Nozzle-connecting tube **211** connects to three-way control valve **206** and terminates at delivery nozzle **212.** In the event of a fire originating in LIB-powered device **203,** the portion of temperature sensitive tube **207** where maximum heat (threshold temperature) is detected ruptures, releasing the inert gas or thermal runaway termination agent within temperature sensitive tube **207** into enclosure **201,** and simultaneously resulting in a pressure drop within temperature sensitive tube **207** which activates three-way control valve **206** to divert flow from temperature sensitive detection tube **207** to nozzle-connecting tube **211,** delivering the thermal runaway termination agent from thermal runaway termination agent storage container **205** through three-way control valve **206,** into nozzle-connecting tube **211** and out from delivery nozzle **212.** Release of the thermal runaway termination agent into enclosure **201** results in flame extinguishment and termination of thermal runaway in LIB-powered device **203** and prevents reignition following initial extinguishment of flames.

In the LIB fire protection system illustrated in FIGURE 2, the temperature sensitive tube **207** performs the functions of temperature sensor (also considered fire detection device), actuator or actuating device (also considered system activation device) of the control valve **206,** but not as a delivery tube for the thermal runaway termination agent into enclosure **201.** Nozzle-connecting tube **211** performs the function of delivery tube with delivery nozzle **212.**

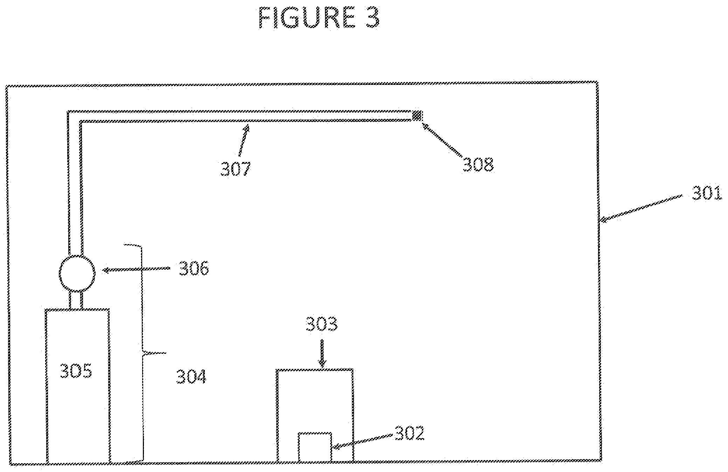

FIGURE 3 is an illustration of a LIB protection system disclosed herein used in a method for extinguishing a flame and terminating thermal runaway in a device powered by a lithium ion battery as disclosed herein, wherein the thermal runaway termination container is located inside enclosure **301,** as opposed to being located outside the enclosure. Enclosure **301** is a hazard area that may experience a lithium-ion battery (LIB) fire originating in a LIB **302** located inside LIB-powered device **303.** The LIB fire protection system includes a source of thermal runaway termination agent **304,** comprising thermal runaway termination agent container **305** and two-way control valve **306,** which is connected to thermal runaway termination agent container **305** and to temperature sensitive tube **307,** the end of which is sealed off via tube end seal **308.** Temperature sensitive tube **307** is pressurized to a desired pressure with inert gas or thermal runaway termination agent. In the event of a fire originating in LIB-powered device **303,** the portion of temperature sensitive tube **307** where maximum heat (threshold temperature) is detected ruptures, forming an opening, releasing the inert gas or thermal runaway termination agent from within temperature sensitive tube **307_**into enclosure **301,** and simultaneously resulting in a pressure drop within temperature sensitive tube **307,** which activates two-way control valve **306** to deliver thermal runaway termination agent from thermal runaway termination agent storage container **305** through two-way control valve **306,** into temperature sensitive tube **307,** out of a_heat stimulus created opening in temperature sensitive tube and into the enclosure **301.** Release of the thermal runaway termination agent into the enclosure **301** results in flame extinguishment and the termination of thermal runaway in the LIB powered device **303** and prevents reignition following initial extinguishment of flames.

FIGURE 3 is similar to FIGURES 1a and 1b. In the LIB fire protection system illustrated in FIGURE 3, the temperature sensitive tube **307** performs the functions of temperature sensor (also considered fire detection device), actuator or actuating device (also considered system activation device) of the control valve and delivery tube for the thermal runaway termination agent into the enclosure.

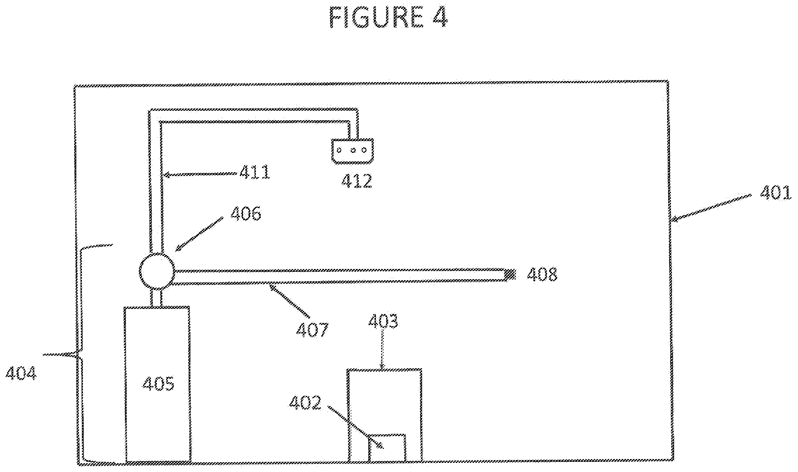

FIGURE 4 is an illustration of a LIB protection system disclosed herein used in a method for extinguishing a flame and terminating thermal runaway in a device powered by a lithium ion battery as disclosed herein, wherein the thermal runaway termination container is located inside enclosure **401,** as opposed to being located outside the enclosure.

Enclosure **401** is a hazard area that may experience a lithium-ion battery (LIB) fire originating in LIB **402** located inside a LIB-powered device **403.** The LIB fire protection system includes a source of thermal runaway termination agent **404,** which comprises thermal runaway termination agent container **405** and three-way control valve **406,** which is connected to thermal runaway termination agent container **405** and to temperature sensitive tube **407,** the end of which is sealed off via tube end seal **408.** Temperature sensitive tube **407** is pressurized to a desired pressure with inert gas or thermal runaway termination agent. Nozzle connecting tube **411** connects to three-way control valve **406** and terminates at delivery nozzle **412.** In the event of a fire originating in LIB-powered device **403,** the portion of the temperature sensitive tube **407** where maximum heat (threshold temperature) is detected ruptures, releasing the inert gas or thermal runaway termination agent within temperature sensitive tube **407** into enclosure **401,** and simultaneously resulting in a pressure drop within temperature sensitive tube **407** which activates three-way control valve **406** to divert flow from temperature sensitive detection tube **407** to nozzle-connecting tube **411,** delivering the thermal runaway termination agent from thermal runaway termination agent storage container **405** through three-way control valve **406,** into nozzle-connecting tube **411** and out from delivery nozzle **412.** Release of the thermal runaway termination agent into enclosure **401** results in flame extinguishment and termination of thermal runaway in LIB-powered device **403** and prevents reignition following initial extinguishment of flames.

FIGURE 4 is similar to FIGURE 2. In the LIB fire protection system illustrated in FIGURE 4, the temperature sensitive tube **407** performs the functions of temperature sensor (also considered fire detection device), actuator or actuating device (also considered system activation device) of the control valve **406,** but not as a delivery tube for the thermal runaway termination agent into enclosure **401.** Nozzle-connecting tube **411** performs the function of delivery tube with delivery nozzle **412.**

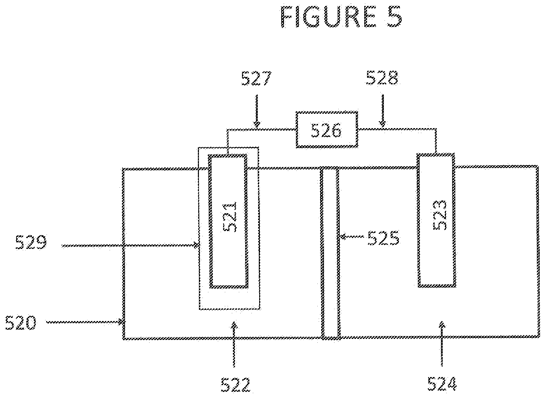

FIGURE 5 is a schematic diagram of a typical lithium-ion battery (LIB). The LIB is comprised of outer casing **520** in which are located anode **521** located in anode chamber **522** of the LIB, and cathode **523** located in cathode chamber **524** of the LIB. Anode chamber **522** and cathode chamber **524** are separated by semipermeable membrane separator **525.** Anode **521** is connected to load **526** via anode-to-load connection **527,** and cathode **523** is connected to load **526** via cathode-to-load connection **528.** Anode **521** is protected with a solid electrolyte interphase (SEI) layer **529.** Anode chamber **522** and cathode chamber **524** are both filled with a liquid electrolyte, not illustrated.

### EXAMPLES

### Materials

A 6700 mAh lithium ion power pack and aluminum-cased 3.2 V DC LiFePO₄ lithium ion polymer batteries are available commercially from multiple sources, including Duracell, Ravpower, and Tenergy. Chemours FM-200^{™} fire extinguishing agent (HFC-227ea) is available from The Chemours Company FC, LLC, Wilmington, DE. A Rotarex direct low-pressure valve, a Rotarex pressure switch, Rotarex FireDETEC temperature sensitive tube and Rotarex end-of-line adapter are all available from Rotarex S.A., Luxembourg. A Harbin Coslight model GYFP4875T datalogger is available from Harbin Coslight Storage Battery Co., Ltd., Heilongjiang, China.

### Example 1 (Comparative). Freeburn test: initiation of thermal runaway in power pack via mechanical failure

Thermal runaway was initiated in a plastic-cased 6700 mAh lithium ion power pack via mechanical damage. A weighted plunger equipped with a piercing tip was dropped through a guide pipe onto the power pack which was located in a 1.15 m³ steel test enclosure equipped with an observation window and closed circuit television (CCTV). Upon piercing of the battery, flaming and thermal runaway occurred, which lasted for approximately 15 minutes.

### Example 2 (Comparative). Freeburn test: Initiation of thermal runaway in 3.2 V DC LiFEPO4 battery via mechanical failure.

The procedure of Example 1 was repeated to initiate thermal runaway in an aluminum-cased 3.2 V DC LiFePO₄ lithium ion polymer battery. Upon piercing the battery, flaming and thermal runaway occurred, which lasted for approximately 15 minutes.

### Example 3. Suppression of lithium ion battery fire and thermal runaway: Mechanical Damage

The procedure of Example 2 was repeated with the addition of a protection system installed in the test enclosure. The protection system consisted of (1) a fire extinguishing agent storage container containing 2 kg of Chemours FM-200^{™} fire extinguishing agent (for delivery of FM-200 concentration of 19.3%), (2) a Rotarex direct low pressure valve located on the storage cylinder, (3) a Rotarex pressure switch located on the low pressure valve, (4) a length of Rotarex FireDETEC temperature sensitive tube pressurized to 15 bar with nitrogen located approximately 6 inches above the lithium ion battery, and (5) a Rotarex end of line adapter affixed to the end of the heat sensing tube. Upon piercing of the battery by the weighted plunger device, thermal runaway occurred as evidenced by flaming. At 22 seconds from the initiation of thermal runaway the system self-activated, releasing the FM-200^{™} agent and all flaming was extinguished within 2 seconds. The discharge time was approximately 2 minutes. No reignition occurred after a 15 minute hold time and reignition did not occur upon opening of the test enclosure and exposure of the test enclosure contents to air.

### Example 4. Suppression of lithium ion battery fire and thermal runaway: Overcharged/Overheated Battery

Suppression tests were conducted on a lithium ion battery fire occurring in a Harbin Coslight model GYFP4875T datalogger, powered by a battery pack consisting of twelve aluminum-cased 3.2 V DC LiFePO₄ lithium ion polymer batteries connected in series. The datalogger was located in a 1 m³ 2 bay outdoor cabinet (ODC) equipped with an observation window and a protection system. The protection system consisted of (1) a fire extinguishing agent storage container containing 2 kg of Chemours FM-200^{™} fire extinguishing agent (for delivery of 21.6% v/v FM-200), (2) a Rotarex direct low pressure valve located on the storage cylinder, (3) a Rotarex pressure switch located on the low pressure valve, (4) a length of Rotarex FireDETEC heat sensing tube pressurized to 15 bar with nitrogen located approximately 6 inches above the lithium ion battery, and (5) a Rotarex end of line adapter affixed to the end of the heat sensing tube. Eleven batteries were charged to 100% state of charge and one battery was overcharged through the application of 3.4 to 3.6 volts (100-110 A); after 11 minutes of overcharging a heater located on the overcharged cell was turned on to provide additional heating until thermal runaway commenced, as evidenced by flaming. After 2 minutes the system self-activated, releasing the FM-200^{™} agent (discharge time 2 minutes) and all flaming was extinguished within 20 seconds. No reignition occurred after a 15 minute hold time and reignition did not occur upon opening of the test enclosure and exposure of the test enclosure contents to air.

## Claims

1. A method for extinguishing a flame and terminating thermal runaway in a device powered by a lithium ion battery, which comprises: (a) providing an enclosure; (b) providing a device positioned within the enclosure, wherein the device comprises and is powered by a lithium ion battery; (c) providing a source of a thermal runaway termination agent, wherein the source comprises a container and a two-way control valve, wherein the container contains the thermal runaway termination agent, the two-way control valve is attached to an opening in the container, and the thermal runaway termination agent comprises inert gas and an amount of HFC-227ea that is sufficient to provide a concentration of at least 17% v/v of HFC-227ea when delivered to the enclosure; (d) providing a temperature sensitive tube containing an inert gas or a thermal runaway termination agent at a predetermined pressure and temperature suitable for normal operating conditions of the device, wherein the tube has two ends, wherein (i) one end is in communication with the control valve and the other end is capped, (ii) the tube is located within the enclosure and comprises a temperature sensor for detection of a threshold temperature, and (iii) the tube is disposed in proximity to the lithium ion battery; and (e) providing a heat stimulus, which generates a flame and initiates thermal runaway, whereupon the temperature sensitive tube ruptures, creating an opening in the temperature sensitive tube and causing release of the inert gas or thermal runaway termination agent within the temperature sensitive tube through the heat stimulus-created opening in the temperature sensitive tube and into the enclosure, resulting in a pressure drop within the temperature sensitive tube which actuates the control valve to deliver the thermal runaway termination agent from the storage container through the control valve to the temperature sensitive tube and out of the heat stimulus-created opening in the temperature sensitive tube and into the enclosure; wherein the delivery of the thermal runaway termination agent is **characterized by** a discharge time of at least 18 seconds, a HFC-227ea concentration of at least 17% v/v, and a hold time of 10 to 15 minutes or 15 to 30 minutes or 30 to 60 minutes that are sufficient to extinguish the flame and terminate thermal runaway and the hold time is sufficient to cool the enclosure and the lithium ion battery to a temperature sufficient to prevent reignition following the extinguishment of the flame.

2. The method of claim 1 wherein the temperature sensitive tube contains an inert gas in step (d).

3. The method of claim 2 wherein the inert gas is chosen from nitrogen, argon, helium, carbon dioxide, and mixtures thereof.

4. The method of claim 3 wherein the inert gas further comprises the thermal runaway termination agent.

5. A method for extinguishing a flame and terminating thermal runaway in a device powered by a lithium ion battery, which comprises: (a) providing an enclosure; (b) providing a device positioned within the enclosure, wherein the device comprises and is powered by a lithium ion battery; (c) providing a source of a thermal runaway termination agent, wherein the source comprises a container and a three-way control valve, wherein the container contains the thermal runaway termination agent, the three-way control valve is attached to an opening in the container, and the thermal runaway termination agent comprises HFC-227ea; (d) providing a temperature sensitive tube containing an inert gas or a thermal runaway termination agent at a predetermined pressure and temperature suitable for normal operating conditions of the device, wherein the tube has two ends, wherein (i) one end is in communication with the three-way control valve and the other end is capped, (ii) the tube is located within the enclosure and comprises a temperature sensor for detection of a threshold temperature, and (iii) the tube disposed in proximity to the lithium ion battery; (e) providing a nozzle-connecting tube which is in communication with the three-way control valve on one end and terminates in a nozzle proximal to the lithium ion battery at the other end of the nozzle-connecting tube; and (f) providing a heat stimulus, which generates a flame and initiates thermal runaway, whereupon the temperature sensitive tube ruptures, creating an opening in the temperature sensitive tube ("heat stimulus-created opening") and causing release of the inert gas or thermal runaway termination agent within the temperature sensitive tube through the heat stimulus-created opening in the temperature sensitive tube and into the enclosure, resulting in a pressure drop within the temperature sensitive tube which actuates the three-way control valve to deliver the thermal runaway termination agent from the storage container through the three-way control valve to the nozzle-connecting tube, resulting in the release of the thermal runaway termination agent from the nozzle into the enclosure; wherein the delivery of the thermal runaway termination agent is **characterized by** a discharge time of at least 18 seconds, a HFC-227ea concentration of at least 17% v/v, and a hold time of 10 to 15 minutes or 15 to 30 minutes or 30 to 60 minutes that are sufficient to extinguish the flame and terminate thermal runaway and the hold time is sufficient to cool the enclosure and the lithium ion battery to a temperature sufficient to prevent reignition following the extinguishment of the flame.

6. The method of claim 5 wherein the temperature sensitive tube contains an inert gas in step (d).

7. The method of claim 6 wherein the inert gas is chosen from nitrogen, argon, helium, carbon dioxide, and mixtures thereof.

8. The method of any one of claims 1-7, wherein the lithium ion battery comprises an anode chamber comprising an anode, a cathode chamber comprising a cathode and a semipermeable membrane, which separates the anode chamber from the cathode chamber and wherein the anode is constructed of graphite protected with a solid electrolyte interphase layer and the cathode is constructed of a lithium metal oxide chosen from LiCoO₂, LiFePO₄, LiMn₂O₄ or LiNiMnCoO₂.

## Patentansprüche

1. Verfahren zum Löschen einer Flamme und zum Beenden eines thermischen Durchgehens in einer Vorrichtung, die von einer Lithium-Ionen-Batterie gespeist wird, umfassend: (a) Bereitstellen eines Gehäuses; (b) Bereitstellen einer Vorrichtung, die innerhalb des Gehäuses positioniert ist, wobei die Vorrichtung eine Lithium-Ionen-Batterie umfasst und von dieser mit Strom versorgt wird; (c) Bereitstellen einer Quelle eines Mittels zur Beendigung des thermischen Durchgehens, wobei die Quelle einen Behälter und ein Zweiwege-Steuerventil umfasst, wobei der Behälter das Mittel zur Beendigung des thermischen Durchgehens enthält, das Zweiwege-Steuerventil an einer Öffnung in dem Behälter angebracht ist und das Mittel zur Beendigung des thermischen Durchgehens Inertgas und eine Menge an HFC-227ea umfasst, die ausreicht, um bei Abgabe an das Gehäuse eine Konzentration von mindestens 17 Vol.-%/Vol.-% HFC-227ea bereitzustellen; (d) Bereitstellen eines temperaturempfindlichen Rohrs, das ein Inertgas oder ein Mittel zur Beendigung des thermischen Durchgehens bei einem vorbestimmten Druck und einer vorbestimmten Temperatur enthält, die für normale Betriebsbedingungen der Vorrichtung geeignet sind, wobei das Rohr zwei Enden aufweist, wobei (i) ein Ende mit dem Steuerventil in Verbindung steht und das andere Ende verschlossen ist, (ii) das Rohr innerhalb des Gehäuses angeordnet ist und einen Temperatursensor zur Erfassung einer Schwellentemperatur umfasst und (iii) das Rohr in der Nähe der Lithium-Ionen-Batterie angeordnet ist; und (e) Bereitstellen eines Wärmestimulus, der eine Flamme erzeugt und ein thermisches Durchgehen auslöst, woraufhin das temperaturempfindliche Rohr zerreißt, wodurch eine Öffnung in dem temperaturempfindlichen Rohr geschaffen wird und die Freisetzung des Inertgases oder des Mittels zur Beendigung des thermischen Durchgehens in dem temperaturempfindlichen Rohr durch die durch den Wärmestimulus geschaffene Öffnung in dem temperaturempfindlichen Rohr und in das Gehäuse bewirkt wird, was zu einem Druckabfall in dem temperaturempfindlichen Rohr führt, das das Steuerventil betätigt, um das Mittel zur Beendigung des thermischen Durchgehens aus dem Vorratsbehälter durch das Steuerventil in das temperaturempfindliche Rohr und aus der durch den Wärmestimulus geschaffenen Öffnung in dem temperaturempfindlichen Rohr und in das Gehäuse abzugeben; wobei die Abgabe des Mittels zur Beendigung des thermischen Durchgehens **gekennzeichnet ist durch** eine Ausströmzeit von mindestens 18 Sekunden, eine HFC-227ea-Konzentration von mindestens 17 Vol.-%/Vol.-% und eine Haltezeit von 10 bis 15 Minuten oder 15 bis 30 Minuten oder 30 bis 60 Minuten, die ausreichen, um die Flamme zu löschen und das thermische Durchgehen zu beenden, und die Haltezeit ausreichend ist, um das Gehäuse und die Lithium-Ionen-Batterie auf eine Temperatur abzukühlen, die ausreicht, um eine erneute Entzündung nach dem Löschen der Flamme zu verhindern.

2. Verfahren nach Anspruch 1, wobei das temperaturempfindliche Rohr in Schritt (d) ein Inertgas enthält.

3. Verfahren nach Anspruch 2, wobei das Inertgas aus Stickstoff, Argon, Helium, Kohlendioxid und Gemischen davon ausgewählt ist.

4. Verfahren nach Anspruch 3, wobei das Inertgas ferner das Mittel zur Beendigung des thermischen Durchgehens umfasst.

5. Verfahren zum Löschen einer Flamme und Beenden eines thermischen Durchgehens in einer Vorrichtung, die von einer Lithium-Ionen-Batterie gespeist wird, umfassend: (a) Bereitstellen eines Gehäuses; (b) Bereitstellen einer Vorrichtung, die innerhalb des Gehäuses positioniert ist, wobei die Vorrichtung eine Lithium-Ionen-Batterie umfasst und von dieser mit Strom versorgt wird; (c) Bereitstellen einer Quelle eines Mittels zur Beendigung des thermischen Durchgehens, wobei die Quelle einen Behälter und ein Dreiwege-Steuerventil umfasst, wobei der Behälter das Mittel zur Beendigung des thermischen Durchgehens enthält, das Dreiwege-Steuerventil an einer Öffnung in dem Behälter angebracht ist und das Mittel zur Beendigung des thermischen Durchgehens HFC-227ea umfasst; (d) Bereitstellen eines temperaturempfindlichen Rohrs, das ein Inertgas oder ein Mittel zur Beendigung des thermischen Durchgehens bei einem vorbestimmten Druck und einer vorbestimmten Temperatur enthält, die für normale Betriebsbedingungen der Vorrichtung geeignet sind, wobei das Rohr zwei Enden aufweist, wobei (i) ein Ende mit dem Dreiwege-Steuerventil in Verbindung steht und das andere Ende verschlossen ist, (ii) das Rohr innerhalb des Gehäuses angeordnet ist und einen Temperatursensor zur Erfassung einer Schwellentemperatur umfasst, und (iii) das Rohr in der Nähe der Lithium-Ionen-Batterie angeordnet ist; (e) Bereitstellen eines Düsenverbindungsrohrs, das an einem Ende mit dem Dreiwege-Steuerventil in Verbindung steht und am anderen Ende des Düsenverbindungsrohrs in einer Düse in der Nähe der Lithium-Ionen-Batterie endet; und (f) Bereitstellen eines Wärmestimulus, der eine Flamme erzeugt und ein thermisches Durchgehen auslöst, woraufhin das temperaturempfindliche Rohr zerreißt, wodurch eine Öffnung in dem temperaturempfindlichen Rohr ("durch Wärmestimulus geschaffene Öffnung") geschaffen wird und die Freisetzung des Inertgases oder des Mittels zur Beendigung des thermischen Durchgehens in dem temperaturempfindlichen Rohr durch die durch den Wärmestimulus geschaffene Öffnung in dem temperaturempfindlichen Rohr und in das Gehäuse bewirkt wird, was zu einem Druckabfall in dem temperaturempfindlichen Rohr führt, was das Dreiwege-Steuerventil betätigt, um das thermische Mittel zur Beendigung des thermischen Durchgehens aus dem Lagerbehälter durch das Dreiwege-Steuerventil zum Düsenverbindungsrohr abzugeben, was zur Freisetzung des Mittels zur Beendigung des thermischen Durchgehens aus der Düse in das Gehäuse führt; wobei die Abgabe des Mittels zur Beendigung des thermischen Durchgehens **gekennzeichnet ist durch** eine Ausströmzeit von mindestens 18 Sekunden, eine HFC-227ea-Konzentration von mindestens 17 Vol.-%/Vol.-% und eine Haltezeit von 10 bis 15 Minuten oder 15 bis 30 Minuten oder 30 bis 60 Minuten, die ausreichen, um die Flamme zu löschen und das thermische Durchgehen zu beenden, und die Haltezeit ausreicht, um das Gehäuse und die Lithium-Ionen-Batterie auf eine Temperatur abzukühlen, die ausreicht, um eine erneute Entzündung nach dem Löschen der Flamme zu verhindern.

6. Verfahren nach Anspruch 5, wobei das temperaturempfindliche Rohr in Schritt (d) ein Inertgas enthält.

7. Verfahren nach Anspruch 6, wobei das Inertgas aus Stickstoff, Argon, Helium, Kohlendioxid und Gemischen davon ausgewählt ist.

8. Verfahren nach einem der Ansprüche 1-7, wobei die Lithium-Ionen-Batterie eine Anodenkammer, umfassend eine Anode, eine Kathodenkammer, umfassend eine Kathode und eine semipermeable Membran, die die Anodenkammer von der Kathodenkammer trennt, umfasst und wobei die Anode aus Graphit aufgebaut ist, das mit einer festen Elektrolyt-Zwischenschicht geschützt ist, und die Kathode aus einem Lithiummetalloxid aufgebaut ist, ausgewählt aus LiCoO₂, LiFePO₄, LiMn₂O₄ oder LiNiMnCoO₂.

## Revendications

1. Procédé pour éteindre une flamme et mettre fin à un emballement thermique dans un dispositif alimenté par une batterie aux ions lithium, qui comprend: (a) la fourniture d'un boîtier ; (b) la fourniture d'un dispositif positionné dans le boîtier, dans lequel le dispositif comprend et est alimenté par une batterie aux ions lithium ; (c) la fourniture d'une source d'un agent de terminaison d'emballement thermique, dans lequel la source comprend un récipient et une vanne de régulation à deux voies, dans lequel le récipient contient l'agent de terminaison d'emballement thermique, la vanne de régulation à deux voies est fixée à une ouverture dans le récipient et l'agent de terminaison d'emballement thermique comprend un gaz inerte et une quantité de HFC-227ea qui est suffisante pour donner une concentration d'au moins 17% v/v de HFC-227ea lorsqu'il est distribué au boîtier ; (d) la fourniture d'un tube sensible à la température contenant un gaz inerte ou un agent de terminaison d'emballement thermique à une pression et une température prédéterminées appropriées pour des conditions de fonctionnement normales du dispositif, dans lequel le tube a deux extrémités, dans lequel (i) une extrémité est en communication avec la vanne de régulation et l'autre extrémité est bouchée, (ii) le tube est localisé dans le boîtier et comprend un capteur de température pour la détection d'une température seuil et (iii) le tube est placé à proximité de la batterie aux ions lithium ; et (e) la fourniture d'un stimulus de chaleur, qui génère une flamme et initie un emballement thermique, en conséquence de quoi le tube sensible à la température se rompt, créant une ouverture dans le tube sensible à la température et entraînant la libération du gaz inerte ou de l'agent de terminaison d'emballement thermique dans le tube sensible à la température par l'ouverture créée par le stimulus thermique dans le tube sensible à la température et dans le boîtier, conduisant à une chute de pression dans le tube sensible à la température qui déclenche la vanne de régulation pour qu'elle distribue l'agent de terminaison d'emballement thermique depuis le récipient de stockage par la vanne de régulation vers le tube sensible à la température et qu'il sorte de l'ouverture créée par le stimulus de chaleur dans le tube sensible à la température et dans le boîtier ; dans lequel la distribution de l'agent de terminaison d'emballement thermique est **caractérisée par** un temps de décharge d'au moins 18 secondes, une concentration de HFC-227ea d'au moins 17% v/v et un temps de maintien de 10 à 15 minutes ou de 15 à 30 minutes ou de 30 à 60 minutes qui sont suffisants pour éteindre la flamme et mettre fin à l'emballement thermique et le temps de maintien est suffisant pour refroidir le boîtier et la batterie aux ions lithium à une température suffisante pour prévenir une reprise de feu suivant l'extinction de la flamme.

2. Procédé selon la revendication 1, dans lequel le tube sensible à la température contient un gaz inerte dans l'étape (d).

3. Procédé selon la revendication 2, dans lequel le gaz inerte est choisi parmi l'azote, l'argon, l'hélium, le dioxyde de carbone et des mélanges de ceux-ci.

4. Procédé selon la revendication 3, dans lequel le gaz inerte comprend en outre l'agent de terminaison d'emballement thermique.

5. Procédé pour éteindre une flamme et mettre fin à un emballement thermique dans un dispositif alimenté par une batterie aux ions lithium, qui comprend: (a) la fourniture d'un boîtier ; (b) la fourniture d'un dispositif positionné dans le boîtier, dans lequel le dispositif comprend et est alimenté par une batterie aux ions lithium ; (c) la fourniture d'une source d'un agent de terminaison d'emballement thermique, dans lequel la source comprend un récipient et une vanne de régulation à trois voies, dans lequel le récipient contient l'agent de terminaison d'emballement thermique, la vanne de régulation à trois voies est fixée à une ouverture dans le récipient et l'agent de terminaison d'emballement thermique comprend du HFC-227ea ; (d) la fourniture d'un tube sensible à la température contenant un gaz inerte ou un agent de terminaison d'emballement thermique à une pression et une température prédéterminées appropriées pour des conditions de fonctionnement normales du dispositif, dans lequel le tube a deux extrémités, dans lequel (i) une extrémité est en communication avec la vanne de régulation à trois voies et l'autre extrémité est bouchée, (ii) le tube est localisé dans le boîtier et comprend un capteur de température pour la détection d'une température seuil et (iii) le tube est placé à proximité de la batterie aux ions lithium ; (e) la fourniture d'un tube de raccordement à une buse qui est en communication avec la vanne de régulation à trois voies à une extrémité et se termine en une buse à proximité de la batterie aux ions lithium à l'autre extrémité du tube de raccordement à une buse ; et (f) la fourniture d'un stimulus de chaleur, qui génère une flamme et initie un emballement thermique, en conséquence de quoi le tube sensible à la température se rompt, créant une ouverture dans le tube sensible à la température (« ouverture créée par stimulus de chaleur ») et entraînant la libération du gaz inerte ou de l'agent de terminaison d'emballement thermique dans le tube sensible à la température par l'ouverture créée par le stimulus thermique dans le tube sensible à la température et dans le boîtier, conduisant à une chute de pression dans le tube sensible à la température qui déclenche la vanne de régulation à trois voies pour qu'elle distribue l'agent de terminaison d'emballement thermique depuis le récipient de stockage par la vanne de régulation à trois voies vers le tube de raccordement à une buse, conduisant à la libération de l'agent de terminaison d'emballement thermique depuis la buse dans le boîtier ; dans lequel la distribution de l'agent de terminaison d'emballement thermique est **caractérisée par** un temps de décharge d'au moins 18 secondes, une concentration de HFC-227ea d'au moins 17% v/v et un temps de maintien de 10 à 15 minutes ou de 15 à 30 minutes ou de 30 à 60 minutes qui sont suffisants pour éteindre la flamme et mettre fin à l'emballement thermique et le temps de maintien est suffisant pour refroidir le boîtier et la batterie aux ions lithium à une température suffisante pour prévenir une reprise de feu suivant l'extinction de la flamme.

6. Procédé selon la revendication 5, dans lequel le tube sensible à la température contient un gaz inerte dans l'étape (d).

7. Procédé selon la revendication 6, dans lequel le gaz inerte est choisi parmi l'azote, l'argon, l'hélium, le dioxyde de carbone et des mélanges de ceux-ci.

8. Procédé selon l'une quelconque des revendications 1-7, dans lequel la batterie aux ions lithium comprend une chambre anodique comprenant une anode, une chambre cathodique comprenant une cathode et une membrane semi-perméable, qui sépare la chambre anodique de la chambre cathodique et dans lequel l'anode est composée de graphite protégé avec une couche interphase d'électrolyte solide et la cathode est composé d'un oxyde de métal et de lithium choisi parmi: LiCoO₂, LiFePO₄, LiMn₂O₄ ou LiNiMnCoO₂.
